# FASCICULE DE BREVET EUROPEEN

(11) **EP 2 081 271 B1**
(45) Date de publication et mention de la délivrance du brevet: **07.09.2011**
(21) Numéro de dépôt: 09290018.2
(22) Date de dépôt: 09.01.2009
(51) Int. Cl.: H02G 15/18, H02G 1/14

(54) **Ensemble pour recouvrir à enserrement un élément allongé avec un manchon élastique de protection**
Einheit zur Ummantelung eines länglichen Elements mit einer elastischen Schutzhülle
Unit for covering by tightly binding an elongated element with a protective elastic sleeve

(30) Priorité: 16.01.2008 FR 0850261
(43) Date de publication de la demande: 22.07.2009
(73) Titulaire: Societe Industrielle de Construction d'Appareils et de Materiel Electriques, 19230 Arnac Pompadour (FR)
(72) Inventeur: Francois, Pierre Henri Adrien, 33000 Bordeaux (FR); Gorecki, Piotr, 24120 Terrasson la Villedieu (FR); Chanat, Laurent, 19100 Brive la Gaillarde (FR)
(74) Mandataire: Lepelletier-Beaufond, François

(56) Documents cités:
- EP-A- 0 917 269
- FR-A- 2 791 480

## Description

L'invention concerne la pose d'un manchon élastique de protection sur un élément allongé tel qu'un câble électrique ou deux câbles électriques joints l'un à l'autre.

On connaît déjà, notamment par la demande de brevet français 2 791 480, des ensembles pour effectuer une telle pose comportant, en outre du manchon élastique, un noyau tubulaire servant à maintenir en expansion le manchon, qui le recouvre à enserrement, le noyau étant adapté à recevoir intérieurement l'élément allongé puis à coulisser à la fois par rapport à l'élément allongé et par rapport au manchon élastique pour que ce dernier vienne recouvrir à enserrement l'élément allongé.

Pour permettre au manchon élastique de coulisser par rapport au noyau tubulaire, il est interposé entre ces derniers un film à faible coefficient de frottement qui s'étend au-delà d'une extrémité du manchon jusqu'à une extrémité du noyau opposée à ladite extrémité du manchon, le film faisant demi-tour sur cette extrémité du noyau, à l'intérieur duquel il se raccorde à un lien élastique fixé à l'autre extrémité du noyau pour être mis en tension.

Ce lien élastique assiste le coulissement du film à faible coefficient de frottement par rapport au noyau de sorte qu'il suffit d'une faible traction manuelle sur le noyau pour provoquer le coulissement du manchon élastique.

L'invention vise à fournir un ensemble du même genre qui soit particulièrement commode et fiable tant à la fabrication qu'à l'utilisation.

Elle propose à cet effet un ensemble pour recouvrir à enserrement un élément allongé de dimensions prédéterminées avec un manchon élastique de protection, comportant :
- ledit manchon ;
- un noyau tubulaire de maintien en expansion dudit manchon, recouvert à enserrement par ledit manchon, adapté à recevoir intérieurement ledit élément allongé ; et
- un film à faible coefficient de frottement interposé entre ledit manchon et ledit noyau pour permettre audit noyau de coulisser par rapport audit manchon, ledit film s'étendant au moins depuis une extrémité du manchon jusqu'à une première extrémité du noyau opposée à ladite extrémité du manchon ;

une seconde extrémité du noyau étant située au-delà de ladite extrémité du manchon et ledit film à faible coefficient de frottement faisant demi-tour sur ladite première extrémité du noyau puis s'étendant intérieurement audit noyau, caractérisé en ce que ledit film s'étend intérieurement audit noyau jusqu'à sa seconde extrémité sur laquelle il fait demi-tour puis s'étend extérieurement au noyau jusqu'audit manchon auquel il est fixé extérieurement.

Si l'on permet au manchon élastique de se contracter sur l'élément allongé au-delà de la première extrémité du noyau, cette contraction produit une poussée sur la première extrémité du noyau, lequel est alors entraîné dans le sens qui va de sa première extrémité vers sa seconde extrémité, le mouvement d'entraînement se poursuivant jusqu'à ce que le noyau soit expulsé hors du manchon.

La façon dont est disposé le film à faible coefficient de frottement par rapport au noyau et par rapport au manchon, et en particulier la fixation du film au manchon, est telle qu'au cours de l'expulsion, la partie du film encore interposée entre le tube et le manchon ne glisse pas par rapport au manchon.

On évite ainsi, ou en tout cas on réduit très fortement, les risques que le film se froisse entre le manchon et le noyau lors de l'expulsion, ce qui pourrait interrompre le mouvement d'expulsion, que l'opérateur devrait alors achever en agissant sur le noyau et sur le manchon.

L'absence de glissement entre le film et le manchon offre en outre l'avantage d'éviter, ou en tout cas de réduire très fortement, les risques qu'une portion du film à faible coefficient de frottement se déchire et reste prise entre l'élément allongé et le manchon élastique, ce qui serait susceptible de dégrader les performances de la protection procurée par le manchon élastique (une portion de film restant ainsi interposée pourrait par exemple dégrader l'isolation électrique et/ou l'étanchéité à l'air et à l'eau procurée par le manchon élastique).

Le fait que ce soit le film à faible coefficient de frottement lui-même (et non un lien raccordé à celui-ci) qui s'étend intérieurement au noyau puis fait demi-tour sur la seconde extrémité de celui-ci et vient se fixer extérieurement sur le manchon, est particulièrement commode lors de la fabrication et fiable à l'utilisation.

Selon des caractéristiques préférées comme étant favorables au bon déroulement de l'expulsion du noyau par le manchon, ledit film est en tension.

Selon des caractéristiques préférées pour des raisons de simplicité et de commodité tant à la fabrication qu'à l'utilisation, l'ensemble selon l'invention comporte un anneau élastique pour fixer ledit film sur la surface externe dudit manchon ; et, de préférence, pour que le film reste fixé au manchon jusqu'à la fin de l'expulsion du noyau, ledit anneau élastique est disposé au voisinage de ladite première extrémité dudit manchon.

Dans un premier mode de réalisation préféré comme étant particulièrement simple, ladite première extrémité dudit noyau est située au-delà de la seconde extrémité dudit manchon.

Dans d'autres modes de réalisation, l'ensemble selon l'invention comporte une bague frangible disposée dans le prolongement dudit noyau et également enserrée par ledit manchon.

Une telle bague permet d'amorcer de façon particulièrement commode la contraction du manchon sur l'élément allongé.

Dans un mode de réalisation préféré dans le cas où le manchon ne doit pas présenter une grande longueur, ladite bague frangible présente une longueur correspondant à la distance séparant ladite première extrémité dudit noyau de la seconde extrémité dudit manchon.

Dans d'autres modes de réalisation préférés pour le cas où le manchon doit présenter une longueur relativement grande, l'ensemble selon l'invention comporte deux dits noyaux.

Dans un premier mode de mise en oeuvre, particulièrement simple, ladite première extrémité d'un premier dit noyau est disposée contre ladite première extrémité d'un second dit noyau.

Dans un deuxième mode de mise en oeuvre, particulièrement commode pour amorcer la contraction du manchon sur l'élément allongé, l'ensemble selon l'invention comporte une bague frangible formant entretoise entre la première extrémité d'un premier dit noyau et la première extrémité d'un second dit noyau.

L'exposé de l'invention sera maintenant poursuivi par la description détaillée d'exemples de réalisation, donnée ci-après à titre illustratif et non limitatif, en référence aux dessins annexés. Sur ceux-ci :
- la figure 1 est une vue en coupe longitudinale d'un premier mode de réalisation de l'ensemble selon l'invention ;
- la figure 2 est la vue en coupe transversale repérée par II-II sur la figure 1 ;
- la figure 3 est une vue semblable à la figure 1 pour un deuxième mode de réalisation de l'ensemble selon l'invention ;
- la figure 4 est une vue semblable à la figure 3, mais avec un élément allongé à recouvrir mis en place à l'intérieur de l'ensemble ;
- les figures 5 et 6 sont des vues semblables mais montrant le noyau de l'ensemble en cours d'expulsion par le manchon;
- les figures 7 et 8 sont des vues semblables à la figure 1 montrant respectivement un troisième et un quatrième mode de réalisation de l'ensemble selon l'invention ;
- la figure 9 est une vue semblable à la figure 8 mais avec un élément allongé à recouvrir en place dans l'ensemble ; et
- la figure 10 est une vue semblable à la figure 9 mais montrant les noyaux de l'ensemble en cours d'expulsion par le manchon.

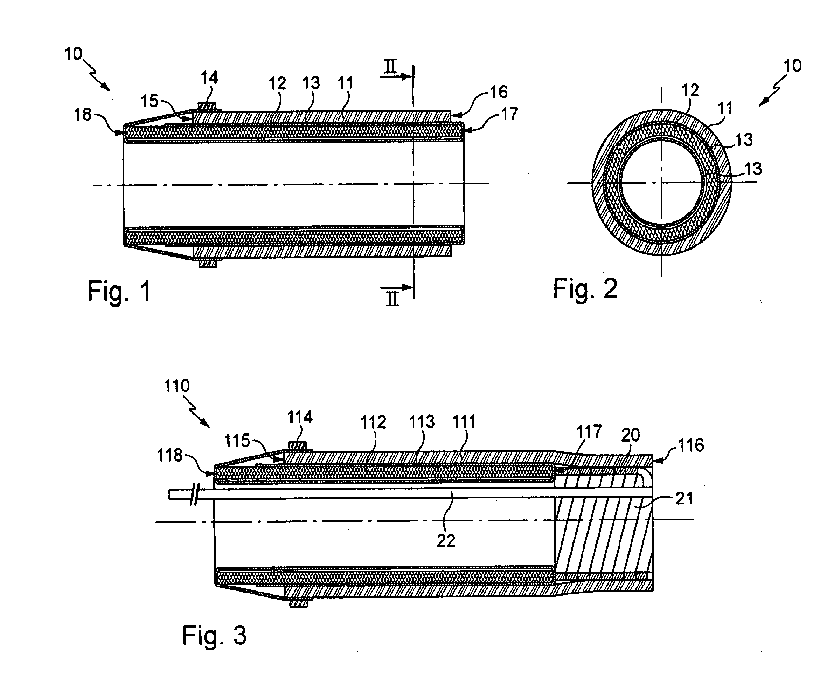

L'ensemble 10 illustré sur la figure 1 comporte un manchon élastique de protection 11, un noyau tubulaire 12, un film 13 à faible coefficient de frottement et un anneau élastique 14 enserrant le film 13 sur la surface externe du manchon 11 afin de l'y fixer.

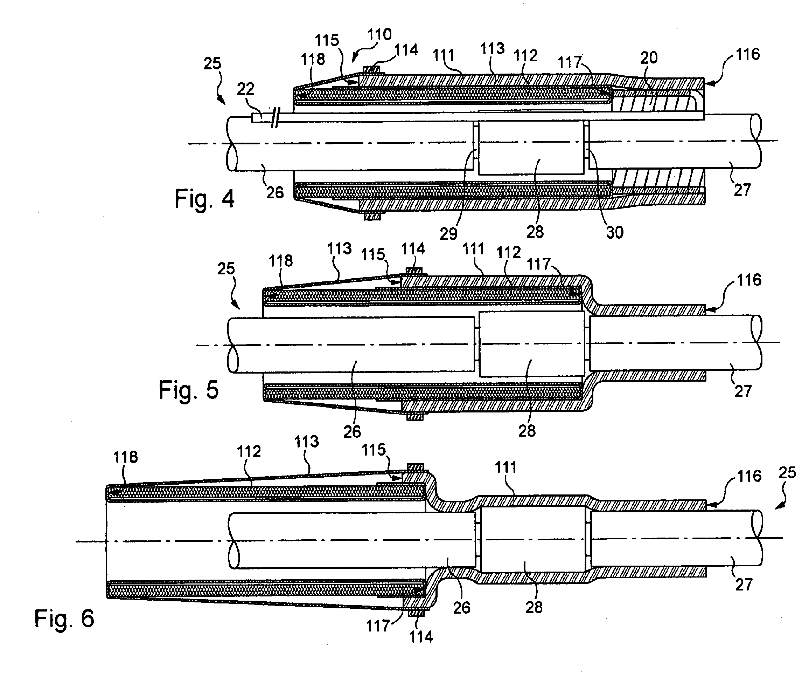

Le manchon 11 est prévu pour recouvrir à enserrement, ainsi que montré sur la figure 6 pour le manchon semblable 111, un élément allongé tel qu'un tronçon de câble électrique ou deux tronçons de câbles électriques afin de procurer une isolation électrique et une étanchéité à l'air et à l'eau.

Le noyau tubulaire 12 sert à maintenir le manchon 11 en expansion, c'est-à-dire dans un état dilaté radialement par rapport à l'état qu'il adopte en l'absence de contrainte externe. Le noyau 12 est ainsi recouvert à enserrement par le manchon 11. L'espace interne au noyau 12 est adapté à recevoir intérieurement l'élément allongé qui doit être recouvert par le manchon de protection 11.

Le film 13 à faible coefficient de frottement est interposé entre le manchon 11 et le noyau 12 pour leur permettre de coulisser l'un par rapport à l'autre.

Le noyau 12 peut ainsi coulisser à la fois par rapport à l'élément allongé qui y est mis en place et par rapport au manchon 11 pour que celui-ci vienne recouvrir à enserrement l'élément allongé, ainsi qu'expliqué ultérieurement plus en détail.

Le noyau 12 s'étend au-delà de chacune des extrémités 15 et 16 du manchon 11. L'extrémité 17 du noyau 12 est relativement proche de l'extrémité 16 du manchon 11 située du même côté tandis que l'autre extrémité 18 du noyau 12 est relativement éloignée de l'extrémité 15 du manchon 11 située du même côté.

La proximité des extrémités 16 et 17 est utile pour amorcer de façon simple et commode l'extraction du noyau 12, qui est prévue pour s'effectuer avec le noyau 12 qui est entraîné par rapport au manchon 11 dans le sens qui va de l'extrémité 17 vers l'extrémité 18, ainsi qu'expliqué plus en détail ultérieurement.

Le film 13 est interposé entre le manchon élastique 11 et le noyau 12 sur toute la longueur du manchon 11, c'est-à-dire entre ses extrémités 15 et 16. Le film 13 se prolonge légèrement au-delà de l'extrémité 15. De l'autre côté du manchon 11, le film 13 s'étend au-delà de l'extrémité 16 jusqu'à faire demi-tour sur l'extrémité 17 du manchon 12 située du côté de l'extrémité 16 puis s'étend intérieurement au noyau 12 jusqu'à son autre extrémité 18 sur laquelle il fait demi-tour puis s'étend extérieurement au noyau 12 jusqu'au manchon 11 auquel il est fixé extérieurement par l'anneau élastique 14.

On va maintenant décrire l'ensemble 110 illustré sur la figure 3 puis, à l'appui des figures 4 à 6, la façon dont le manchon 111 que comporte l'ensemble 110 est posé sur un élément allongé. On expliquera ensuite comment s'effectue la pose du manchon 11 de l'ensemble 10.

D'une façon générale, on a employé pour l'ensemble 110 les mêmes références numériques que pour l'ensemble 10, mais additionnées du nombre 100.

Dans l'ensemble 110, le noyau 112, le film 113 et l'anneau élastique 114 sont identiques au noyau 12, au film 13 et à l'anneau 14, respectivement.

Le manchon 111 se différencie du manchon 11 uniquement en ce qu'il est plus long.

En outre du manchon 111, du noyau 112, du film 113 et de l'anneau 114, l'ensemble 110 comporte une: bague frangible 20 ayant en section sensiblement la même forme que le noyau 112 et disposée dans le prolongement de celui-ci.

Le noyau 112 s'étend au-delà de l'extrémité 115 du manchon 111 de la même manière que le noyau 12 s'étend au-delà de l'extrémité 15 du manchon 11, l'extrémité 118 du noyau 112 étant relativement éloignée de l'extrémité 115 du manchon 111.

Alors que dans l'ensemble 10, l'extrémité 16 du manchon 11 est en retrait par rapport à l'extrémité 17 du noyau 12, l'extrémité 116 du manchon 111 est située au-delà de l'extrémité 117 du noyau 112.

Le manchon 111 recouvre non seulement le noyau 112 mais aussi la bague frangible 20 dont la longueur correspond à la distance séparant l'extrémité 117 du noyau 112 de l'extrémité 116 du manchon 111.

Le film 113 est interposé entre le manchon 111 et le noyau 112 sur toute la longueur où ils sont en contact, c'est-à-dire entre l'extrémité 115 du manchon 111 et l'extrémité 117 du noyau 112.

La disposition du film 113 par rapport au noyau 112 et au manchon 111 entre l'extrémité 117 et l'anneau 114 est exactement la même que la disposition du film 13 entre l'extrémité 17 et l'anneau 14 : le film 113 fait demi-tour sur l'extrémité 117 puis s'étend intérieurement au noyau 112 jusqu'à l'extrémité 118 sur laquelle il fait demi-tour puis il s'étend extérieurement au noyau 112 jusqu'au manchon 111 auquel il est fixé extérieurement par l'anneau élastique 114.

La bague 20 est formée par l'enroulement en hélice d'une bande 21 dont les bords sont reliés les uns aux autres de façon déchirable, l'une des extrémités de la bande 21 se trouvant au niveau de l'extrémité de la bague 20 qui est contre le noyau 112 (extrémité de la bague 20 que l'on voit à gauche sur la figure 3), alors qu'à l'autre extrémité de la bague 20 (extrémité que l'on voit à droite sur la figure 3), la bande 21 quitte l'enroulement en hélice et s'étend longitudinalement sous la forme d'une lanière 22 à l'intérieur de la bague 20 puis du noyau 112 jusqu'à dépasser de l'extrémité 118.

L'exercice d'un effort de traction sur l'extrémité de la lanière 22 qui dépasse du noyau 112 permet de débobiner progressivement l'enroulement qui forme la bague 20, à partir de l'extrémité que l'on voit à droite sur la figure 3 jusqu'à son débobinage complet.

La bague 20 peut ainsi être entièrement extraite de l'ensemble 110, y compris lorsqu'un élément allongé est disposé à l'intérieur du noyau 112 et de la bague 20, ainsi que montré sur la figure 4.

En pratique, la bague 20 est formée à partir d'une bande préexistante dont les bords sont légèrement soudés ou la bague 20 est faite à partir d'un tube sur lequel est pratiqué une ligne de prédécoupe en hélice, la lanière 22 venant de matière avec le tube ou étant rapportée sur la matière du tube.

La mise en place du noyau 12 dans le manchon 11 ou du noyau 112 et de la bague 20 dans le manchon 111 s'effectue de façon classique, par exemple ainsi que décrit dans la demande de brevet français 2 786 954, avec la portion du film 13 ou 113 prévue pour s'étendre entre l'extrémité 18 ou 118 et l'anneau 14 ou 114 qui est alors libre.

Une fois le manchon 11 ou 111 mis en place, le film 13 ou 113 est retourné autour de l'extrémité 18 ou 118 et fixé au manchon 11 ou 111 grâce à l'anneau élastique 14 ou 114.

De préférence, pour éviter tout pli susceptible de nuire au glissement du noyau 12 ou 112 par rapport au manchon 11 ou 111, le film 13 ou 113 est mis en tension à cette occasion.

Pour éviter l'expulsion du noyau 12 au cours du stockage ou du transport, l'ensemble 10 comporte également des moyens amovibles non illustrés d'immobilisation du manchon 11 par rapport au noyau 12, par exemple un rivet et/ou une bande auto-agrippante.

La bague 20 procure à l'ensemble 110 un certain degré d'immobilisation du manchon 111 par rapport au noyau 112. Suivant les circonstances de stockage et de transport, l'ensemble 110 est muni ou non de moyens complémentaires d'immobilisation tels qu'un rivet et/ou une bande auto-agrippante.

Sur la figure 4, est représenté un élément allongé 25 inséré dans le noyau 112 et dans la bague 20.

L'élément 25 est formé par deux câbles électriques 26 et 27 disposés bout à bout et par un élément de jonction 28 posé sur des tronçons d'extrémité dénudés 29 et 30 respectivement du câble 26 et du câble 27.

Dans l'exemple illustré, les câbles 26 et 27 ne comportent pas d'autres tronçons d'extrémité accessibles de sorte que l'un des câbles 26 et 27 a d'abord été inséré dans l'ensemble 110, l'élément de jonction 28 a ensuite été posé et l'ensemble 110 a ensuite été positionné comme illustré sur la figure 4, c'est-à-dire avec le manchon 111 positionné longitudinalement par rapport à l'élément allongé 25 à l'emplacement qu'il doit adopter sur cet élément.

Pour que le manchon 111 vienne recouvrir l'élément 25, on tire sur l'extrémité de la lanière 22 qui dépasse du noyau 112 pour débobiner la bague 20 et l'extraire complètement.

Cela permet au manchon 111 de se contracter sur l'élément allongé 25 au-delà de l'extrémité 117 du noyau 112, cette contraction produisant une poussée sur l'extrémité 117 en réaction à laquelle le noyau 112 est entraîné dans le sens qui va de l'extrémité 117 vers l'extrémité 118, ainsi que montré sur les figures 5 et 6, le mouvement d'entraînement se poursuivant jusqu'à ce que le noyau 112 soit entièrement expulsé du manchon 111.

Ce dernier recouvre alors à enserrement l'élément allongé 25 auquel il procure, au niveau de l'élément de jonction 28 et de part et d'autre de celui-ci, une isolation électrique et une étanchéité à l'air et à l'eau,

On observera, en comparant les figures 4, 5 et 6, qu'au cours de l'expulsion du noyau 112, la portion du film 113 prise en sandwich entre le manchon 111 et le noyau 112 n'est animée d'aucun mouvement de glissement par rapport au manchon 111 et que d'ailleurs la fixation du film 113 au manchon 111 par la bague 114 garantit qu'un tel mouvement de glissement ne peut exister.

L'expulsion du noyau 112 se produit ainsi de façon régulière, sans à-coup, et les risques qu'une portion du film 113 se déchire et reste présente entre l'élément 25 et le manchon 111 sont éliminés ou pour le moins fortement minimisés. Cela est particulièrement avantageux lorsque l'élément allongé 25 est formé, comme dans l'exemple illustré, par des câbles électriques, un reste de film étant susceptible de dégrader les performances de l'isolation électrique et de l'étanchéité procurée par le manchon 111.

On observera, ainsi qu'on le comprend plus facilement au regard de la figure 6, que l'emploi d'un anneau élastique 114 pour fixer le film 113 sur le manchon 111, en positionnant l'anneau 114 à proximité de l'extrémité 115 du manchon 111, offre l'avantage de libérer automatiquement le film à la fin de l'expulsion du noyau 112, la contraction de la portion du manchon 111 située à proximité de l'extrémité 115 supprimant ou en tout cas diminuant fortement l'effet de cerclage produit par l'anneau 114, ce dernier et le film 113 étant alors libérés du manchon 111.

La mise en oeuvre de l'ensemble 10 (figures 1 et 2) sur un élément allongé tel que 25 est semblable à la mise en oeuvre de l'ensemble 110, la seule différence étant que l'opération qui permet au manchon 11 de se contracter sur l'élément allongé au-delà de l'extrémité 17 du noyau 12 n'est pas le déchirement de la bague 20 mais un coulissement du noyau 12 par rapport au manchon 11 dans le sens de l'extrémité 17 vers l'extrémité 18.

Pour faciliter la tâche de l'opérateur devant ainsi faire coulisser le noyau 12 par rapport au manchon 11, il est prévu dans une variante non illustrée de l'ensemble 10, que le film 13, plutôt que d'être présent sur la totalité du pourtour interne du noyau 12, se subdivise, entre l'extrémité 17 et l'extrémité 18, en deux tronçons se rétrécissant chacun jusqu'à former une bande relativement étroite, chacune des deux bandes faisant demi-tour sur l'extrémité 18 et venant se fixer sur le manchon 11 grâce à la bague élastique 14.

L'espace existant entre les deux bandes donne directement accès au noyau 12 et permet de le saisir, par exemple entre les doigts d'une main alors que l'autre main saisit le manchon 11.

Pour faciliter encore la tâche de l'utilisateur, une variante plus élaborée de l'ensemble 10 présente dans le noyau 12, entre les bandes de film, à proximité de l'extrémité 18, un ou plusieurs trous permettant la mise en place d'un crochet pour tirer sur le noyau 12.

On notera qu'il est également intéressant, dans l'ensemble 110, que le film 113 se subdivise en deux bandes entre les extrémités 117 et 118, notamment pour faciliter la fabrication de l'ensemble 110, la manipulation de deux bandes étant plus aisée que celle d'une portion tubulaire.

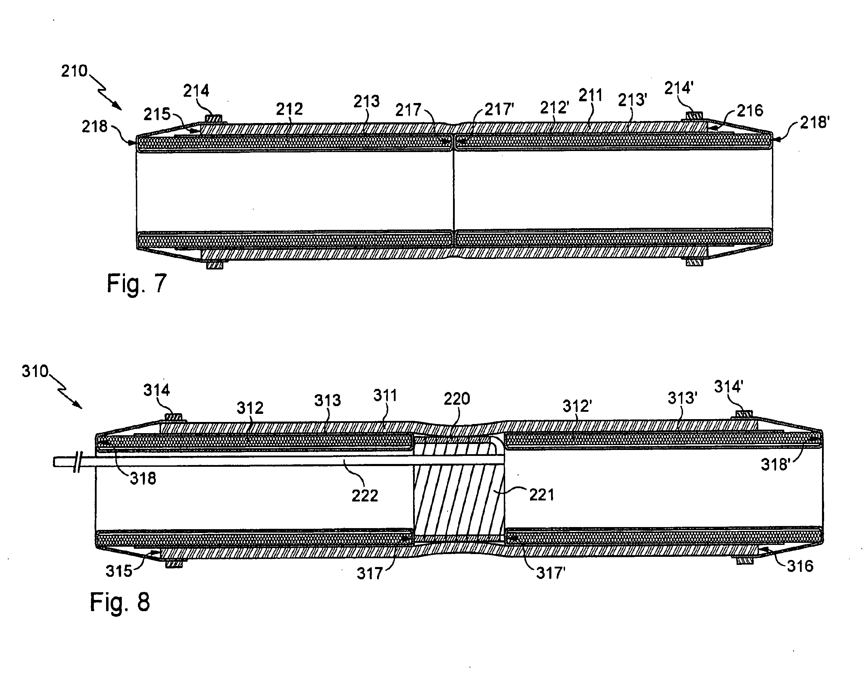

On va maintenant décrire l'ensemble 210 illustré sur la figure 7. D'une façon générale, on a employé les mêmes références numériques que pour l'ensemble 10, mais additionnées du nombre 200.

Dans l'ensemble 210, le noyau 212, le film 213 et l'anneau élastique 214 sont identiques au noyau 12, au film 13 et à l'anneau 14, respectivement.

Le manchon 211 se différencie du manchon 11 uniquement en ce qu'il est sensiblement deux fois plus long.

L'ensemble 210 comporte en outre un second noyau tubulaire 212', un second film à faible coefficient de frottement 213' et un second anneau élastique 214' identiques au noyau 212, au film 213 et à l'anneau 214, respectivement.

Le noyau 212 s'étend au-delà de l'extrémité 215 du manchon 211 de la même manière que le noyau 12 s'étend au-delà de l'extrémité 15 du manchon 11, l'extrémité 218 du noyau 212 étant relativement éloignée de l'extrémité 215 du manchon 211.

Le noyau 212' s'étend lui aussi au-delà de l'extrémité 216 du manchon 211 de la même manière que le noyau 12 s'étend au-delà de l'extrémité 15 du manchon 11, l'extrémité 218' du noyau 212' étant relativement éloignée de l'extrémité 216 du manchon 211.

L'extrémité 217 du manchon 212 et l'extrémité 217' du manchon 212' sont situées à peu près au centre du manchon 211, l'une contre l'autre.

D'une façon générale, l'agencement du manchon 212', du film 213' et de l'anneau élastique 214' est l'image miroir de l'agencement du noyau 212, du film 213 et de l'anneau 214.

La description qui suit pour le noyau 212, le film 213 et l'anneau 214 vaut également pour le noyau 212', le film 213' et l'anneau 214' à condition d'ajouter un prime aux références les concernant et de remplacer l'extrémité 215 du manchon 211 par l'extrémité 216.

Le film 213 est interposé entre le manchon 211 et le noyau 212 sur toute la longueur où ils sont en contact, c'est-à-dire entre l'extrémité 215 du manchon 211 et l'extrémité 217 du noyau 212.

La disposition du film 213 par rapport au noyau 212 et au manchon 211 entre l'extrémité 217 et l'anneau 214 est exactement la même que la disposition du film 13 entre l'extrémité 17 et l'anneau 14 : le film 213 fait demi-tour sur l'extrémité 217 puis s'étend intérieurement au noyau 212 jusqu'à l'extrémité 218 sur laquelle il fait demi-tour puis il s'étend extérieurement au noyau 212 jusqu'au manchon 211 auquel il est fixé par l'anneau élastique 214.

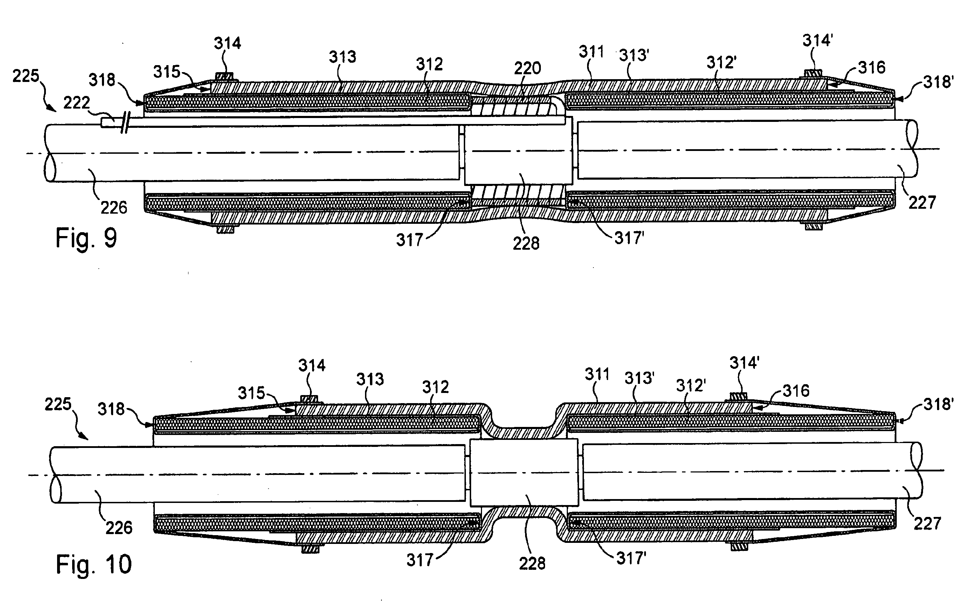

On va maintenant décrire l'ensemble 310 illustré sur la figure 8 puis, à l'appui des figures 9 et 10, la façon dont le manchon 311 que comporte l'ensemble 310 est posé sur un élément allongé. On expliquera ensuite comment s'effectue la pose du manchon 211 de l'ensemble 210.

D'une façon générale, on a employé pour l'ensemble 310 les mêmes références numériques que pour l'ensemble 210, mais additionnées du nombre 100.

Dans l'ensemble 310, les noyaux 312 et 312', les films 313 et 313' et les anneaux élastiques 114 et 114' sont identiques aux noyaux 212 et 212', aux films 213 et 213' et aux anneaux 214 et 214', respectivement.

Le manchon 311 se différencie du manchon 211 uniquement en ce qu'il est plus long,

En outre du manchon 311, des noyaux 312 et 312', des films 313 et 313' et des anneaux 314 et 314', l'ensemble 310 comporte une bague frangible 220 ayant en section sensiblement la même forme que les noyaux 312 et 312' entre lesquelles elle est disposée dans leur prolongement à la façon d'une entretoise.

D'une façon générale, la description donnée ci-dessus pour la bague 20 vaut pour la bague 220 en rajoutant le nombre 200 aux références numériques 20, 21 et 22.

La description donnée ci-dessus pour l'agencement du noyau 112 par rapport au manchon 111 et à la bague 20 ainsi que pour l'agencement du film 113 par rapport au manchon 111, au noyau 112 et à l'anneau 114 vaut également pour l'agencement du noyau 312 par rapport au manchon 311 et à la bague 220 ainsi que pour l'agencement du film 313 par rapport au manchon 311 et au noyau 312, à condition de rajouter le nombre 200 aux références numériques de cette description.

De même, la description donnée ci-dessus pour l'agencement du noyau 112, du film 113 et de l'anneau 114 les uns par rapport aux autres ainsi que par rapport au manchon 111 vaut pour l'agencement du noyau 312', du film 313' et de l'anneau 314' les uns par rapport aux autres et par rapport au manchon 311, à condition de rajouter le nombre 200 et un prime aux références numériques de cette description, sauf pour le manchon 311, et de remplacer l'extrémité 115 du manchon 111 par l'extrémité 316 du manchon 311.

Sur la figure 9 est représenté un élément allongé 225 inséré dans le noyau 312, dans la bague 220 et dans le noyau 312'.

La description donnée ci-dessus pour l'élément 25 vaut également pour l'élément 225 à condition de rajouter le nombre 200 aux références numériques,

Pour que le manchon 311 vienne recouvrir l'élément 225, on tire sur l'extrémité de la lanière 222 qui dépasse du noyau 312 pour débobiner la bague 220 et l'extraire complètement.

Cela permet, comme illustré sur la figure 10, au manchon 311 de se contracter sur l'élément allongé 225 au-delà de l'extrémité 317 du noyau 312 et de l'extrémité 317' du noyau 312', cette contraction produisant une poussée sur chacune des extrémités 117 et 117' en réaction à laquelle les noyaux 112 et 112' sont entraînés dans le sens qui va respectivement de l'extrémité 117 vers l'extrémité 118 et de l'extrémité 117' vers l'extrémité 118', le mouvement d'entraînement se poursuivant jusqu'à ce que les noyaux 112 et 112' soient entièrement expulsés du manchon 311.

Ce dernier recouvre alors à enserrement l'élément allongé 225 auquel il procure, au niveau de l'élément de jonction 228 et de part et d'autre de celui-ci, une isolation électrique et une étanchéité à l'air et à l'eau.

La description donnée ci-dessus de l'expulsion du noyau 112 vaut également pour les noyaux 312 et 312' à condition de rajouter aux références numériques de cette description le nombre 200 pour le noyau 312, et, pour le noyau 312', le nombre 200 et un prime ainsi que remplacer à l'extrémité 115 du manchon 111 par l'extrémité 316 du manchon 311.

La mise en oeuvre de l'ensemble 210 (figure 7) sur un élément allongé tel que 25 ou 225 est semblable à la mise en oeuvre de l'ensemble 310, la seule différence étant que l'opération qui permet au manchon 211 de se contracter sur l'élément allongé au-delà de l'extrémité 217 du noyau 212 et/ou au-delà de l'extrémité 217' du noyau 212' n'est pas le déchirement de la bague 220 mais un coulissement du noyau 212 et/ou 212' par rapport au manchon 211 respectivement dans le sens de l'extrémité 217 vers l'extrémité 218 et de l'extrémité 217' vers l'extrémité 218'.

Pour faciliter la tâche de l'opérateur devant ainsi faire coulisser le noyau 212 et/ou le noyau 212' par rapport au manchon 211, il est prévu dans une variante non illustrée que le film 213 et/ou le film 213' se subdivise en deux bandes, ainsi qu'expliqué ci-dessus pour l'ensemble 10.

On notera qu'il est également intéressant, dans l'ensemble 310, de subdiviser le film 313 et/ou le film 313' en deux bandes.

Dans une variante non illustrée, la fixation du film à faible coefficient de frottement tel que 13, 113, 213, 213', 313 et 313' sur le manchon tel que 11, 111, 211 et 311 s'effectue autrement que par un anneau élastique tel que 14, 114, 214, 214', 314 et 314', par exemple par collage.

Dans d'autres variantes non illustrées, les dimensions et la conformation du manchon tel que 11, 111, 211 et 311, du noyau tel que 12, 112, 212, 212', 312 et 312', du film tel que 13, 113, 213, 213', 313 et 313', de l'anneau élastique tel que 14, 114, 214, 214', 314 et 314' et de la bague frangible telle 20 et 220 sont différentes, par exemple le manchon élastique comporte extérieurement des ailettes globalement tronconique lorsqu'il est posé sur un élément allongé tel que 25 et 225.

De nombreuses autres variantes sont possibles en fonction de circonstance, et l'on rappelle à cet égard que l'invention ne se limite pas aux exemples décrits et représentés.

## Revendications

1. Ensemble pour recouvrir à enserrement un élément allongé (25 ; 225) de dimensions prédéterminées avec un manchon élastique de protection (11 ; 111 ; 211 ; 311), comportant :
- ledit manchon (11; 111 ; 211; 311);
- un noyau tubulaire (12 ; 112; 212, 212' ; 312, 312') de maintien en expansion dudit manchon (11; 111 ; 211 ; 311), recouvert à enserrement par ledit manchon, adapté à recevoir intérieurement ledit élément allongé (25 ; 225) ; et
- un film à faible coefficient de frottement (13 ; 113 ; 213, 213' ; 313, 313') interposé entre ledit manchon (11 ; 111 ; 211 ; 311) et ledit noyau (12 ; 112 ; 212, 212'; 312, 312') pour permettre audit noyau de coulisser par rapport audit manchon, ledit film s'étendant au moins depuis une extrémité (15: 115; 215, 216; 315, 316) du manchon jusqu'à une première extrémité (17; 117; 217, 217'; 317, 317') du noyau opposée à ladite extrémité du manchon;
une seconde extrémité (18; 118; 218, 218' ; 318, 318') du noyau (12; 112; 212, 212'; 312, 312') étant située au-delà de ladite extrémité (15; 115; 215, 216; 315, 316) du manchon (11; 111; 211; 311) et ledit film à faible coefficient de frottement (13 ; 113; 213, 213'; 313, 313') faisant demi-tour sur ladite première extrémité (17; 117; 217, 217'; 317, 317') du noyau (12; 112; 212, 212'; 312, 312') puis s'étendant intérieurement audit noyau **caractérisé en ce que** ledit film (13; 113 213, 213') s'étend intérieurement audit noyau jusqu'à sa seconde extrémité (18; 118; 218, 218' ; 318, 318') sur laquelle il fait demi-tour puis s'étend extérieurement au noyau jusqu'audit manchon (11; 111; 211 ; 311) auquel il est fixé extérieurement.

2. Ensemble selon la revendication 1, **caractérisé en ce que** ledit film (13 ; 113 ; 213, 213' ; 313, 313') est en tension.

3. Ensemble selon l'une quelconque des revendications 1 ou 2, **caractérisé en ce qu'**il comporte un anneau élastique (14; 114; 214, 214'; 314, 314') pour fixer ledit film (13; 113; 213, 213'; 313, 313') sur la surface externe dudit manchon (11; 111; 211 ; 311).

4. Ensemble selon la revendication 3, **caractérisé en ce que** ledit anneau élastique (14; 114; 214, 214'; 314, 314') est disposé au voisinage de ladite première extrémité (15; 115 ; 215, 218; 315, 316) dudit manchon (11; 111; 211; 311).

5. Ensemble selon l'une quelconque des revendications 1 à 4, **caractérisé en ce que** ladite première extrémité (17) dudit noyau (12) est située au-delà de la seconde extrémité (16) dudit manchon (11).

6. Ensemble selon l'une quelconque des revendications 1 à 4, **caractérisé en ce qu'**il comporte une bague frangible (20 ; 220) disposée dans le prolongement dudit noyau (12; 312, 312') et également enserrée par ledit manchon (11; 311).

7. Ensemble la revendication 6, **caractérisé en ce que** ladite bague frangible (20) présente une longueur correspondant à la distance séparant ladite première extrémité (117) dudit noyau (112) de la seconde extrémité (116) dudit manchon (111).

8. Ensemble selon' l'une quelconque des revendications 1 à 4, **caractérisé en ce qu'**il comporte deux dits noyaux (212, 212' ; 312, 312').

9. Ensemble selon la revendication 8, **caractérisé en ce que** ladite première extrémité (217) d'un premier dit noyau (212) est disposée contre ladite première extrémité (217') d'un second dit noyau (212').

10. Ensemble selon la revendication 8, **caractérisé en ce qu'**il comporte une bague frangible (220) formant entretoise entre la première extrémité (317) d'un premier dit noyau (312) et la première extrémité (317') d'un second dit noyau (312').

## Claims

1. System for tightly covering an elongate member (25; 225) of predetermined dimensions with an elastic protection sleeve (11; 111; 211; 311), including:
- said sleeve (11; 111; 211; 311);
- a tubular core (12; 112; 212; 212'; 312, 312') for keeping in a stretched condition said sleeve (11; 111; 211; 311), tightly covered by said sleeve, and adapted to receive inside it said elongate member (25; 225); and
- a film (13; 113; 213, 213'; 313, 313') with a low coefficient of friction placed between said sleeve (11; 111; 211; 311) and said core (12; 112; 212, 212'; 312, 312') to enable said core to slide relative to said sleeve, said film extending at least from one end (15; 115; 215, 216; 315, 316) of the sleeve to a first end (17; 117; 217, 217'; 317, 317') of the core opposite said end of the sleeve; a second end (18; 118; 218, 218'; 318, 318') of the core (12; 112; 212, 212'; 312, 312') being situated beyond said end (15; 115; 215, 216; 315, 316) of the sleeve (11; 111; 211; 311) and said low friction coefficient film (13; 113; 213; 213'; 313, 313') making a half-turn at said first end (17; 117; 217, 217'; 317, 317') of the core (12; 112; 212, 212'; 312, 312') and then extending inside said core,
**characterised in that** said film (13; 113; 213; 213') extends inside said core as far as its second end (18; 118; 218, 218'; 318, 318') at which it makes a half-turn and then extends outside the core as far as said sleeve (11; 111; 211; 311) to which it is fixed externally.

2. System according to claim 1, **characterised in that** said film (13; 113; 213, 213'; 313, 313') is tensioned.

3. System according to either of claims 1 or 2, **characterised in that** it includes an elastic ring (14; 114; 214, 214'; 314, 314') for fixing said film (13; 113; 213, 213'; 313, 313') to the external surface of said sleeve (11; 111; 211; 311).

4. System according to claim 3, **characterised in that** said elastic ring (14; 114; 214, 214'; 314, 314') is disposed in the vicinity of said first end (15; 115; 215, 216; 315, 316) of said sleeve (11; 111; 211; 311).

5. System according to any one of claims 1 to 4, **characterised in that** said first end (17) of said core (12) is located beyond the second end (16) of said sleeve (11).

6. System according to any one of claims 1 to 4, **characterised in that** it includes a frangible ring (20; 220) disposed in line with said core (12; 312, 312') and also tightened by said sleeve (11; 311).

7. System according to claim 6, **characterised in that** said frangible ring (20) has a length corresponding to the distance between said first end (117) of said core (112) and the second end (116) of said sleeve (111).

8. System according to any one of claims 1 to 4, **characterised in that** it includes two of said cores (212, 212'; 312, 312').

9. System according to claim 8, **characterised in that** said first end (217) of a first of said cores (212) is disposed against said first end (217') of a second of said cores (212').

10. System according to claim 8, **characterised in that** it includes a frangible ring (220) forming a spacer between the first end (317) of a first of said cores (312) and the first end (317') of a second of said cores (312').

## Patentansprüche

1. Anordnung zum umklammernden Abdecken eines länglichen Elements (25; 225) mit vorgegebenen Abmessungen mittels einer elastischen Schutzmuffe (11; 111; 211; 311), die umfasst:
- die Muffe (11; 111; 211; 311);
- einen rohrförmigen Kern (12; 112; 212, 212'; 312, 312') zum Halten der Muffe (11; 111; 211; 311) bei ihrer Ausdehnung, der von der Muffe umklammernd abgedeckt ist und innen das längliche Element (25; 225) aufnehmen kann; und
- eine Folie (13; 113; 213, 213'; 313, 313') mit geringem Reibkoeffizienten, die zwischen die Muffe (11; 111; 211; 311) und den Kern (12; 112; 212, 212'; 312, 312') eingefügt ist, um dem Kern zu ermöglichen, in Bezug auf die Muffe zu gleiten, wobei sich die Folie von wenigstens einem Ende (15; 116; 215, 216; 315, 316) der Muffe bis zu einem ersten Ende (17; 117; 217, 217'; 317, 317') des Kerns gegenüber dem Ende der Muffe erstreckt;
wobei sich ein zweites Ende (18; 118; 218, 218'; 318, 318') des Kerns (12; 112; 212, 212'; 312, 312') jenseits des Endes (15; 116; 215, 216; 315, 316) der Muffe (11; 111; 211; 311) befindet und wobei die Folie (13; 113; 213, 213'; 313, 313') mit geringem Reibkoeffizient das erste Ende (17; 117; 217, 217'; 317, 317') des Kerns (12; 112; 212, 212'; 312, 312`) halb umgibt und sich dann innerhalb des Kerns erstreckt, **dadurch gekennzeichnet, dass** sich die Folie (13; 113; 213, 213') in dem Kern bis zu seinem zweiten Ende (18; 118; 218, 218'; 318, 318') erstreckt, an dem sie ihn halb umgibt und sich dann außerhalb des Kerns bis zu der Muffe (11; 111; 211; 311) erstreckt, an der sie außen befestigt ist.

2. Anordnung nach Anspruch 1, **dadurch gekennzeichnet, dass** die Folie (13; 113; 213, 213'; 313, 313') unter Spannung steht.

3. Anordnung nach einem der Ansprüche 1 oder 2, **dadurch gekennzeichnet, dass** sie einen elastischen Ring (14; 114; 214, 214'; 314, 314') umfasst, um die Folie (13; 113; 213, 213'; 313, 313') an der äußeren Oberfläche der Muffe (11; 111; 211; 311) zu befestigen.

4. Anordnung nach Anspruch 3, **dadurch gekennzeichnet, dass** der elastische Ring (14; 114; 214, 214'; 314, 314') in der Umgebung des ersten Endes (15; 116; 215, 216; 315, 316) der Muffe (11; 111; 211; 311) angeordnet ist.

5. Anordnung nach einem der Ansprüche 1 bis 4, **dadurch gekennzeichnet, dass** sich das erste Ende (17) des Kerns (12) jenseits des zweiten Endes (16) der Muffe (11) befindet.

6. Anordnung nach einem der Ansprüche 1 bis 4, **dadurch gekennzeichnet, dass** sie einen zerbrechlichen Reif (20; 220) aufweist, der in der Verlängerung des Kerns (12; 312; 312') angeordnet ist und ebenfalls von der Muffe (11; 311) umklammert wird.

7. Anordnung nach Anspruch 6, **dadurch gekennzeichnet, dass** der zerbrechliche Reif (20) eine Länge besitzt, die dem Abstand entspricht, der das erste Ende (117) des Kerns (112) vom zweiten Ende (116) der Muffe (111) trennt.

8. Anordnung nach einem der Ansprüche 1 bis 4, **dadurch gekennzeichnet, dass** sie zwei solche Kerne (212, 212'; 312, 312') umfasst.

9. Anordnung nach Anspruch 8, **dadurch gekennzeichnet, dass** das erste Ende (217) eines ersten Kerns (212) an dem ersten Ende (217') eines zweiten Kerns (212') angeordnet ist.

10. Anordnung nach Anspruch 8, **dadurch gekennzeichnet, dass** sie einen zerbrechlichen Reif (220) aufweist, der zwischen dem ersten Ende (317) eines ersten Kerns (312) und dem ersten Ende (317') eines zweiten Kerns (312') einen Abstandshalter bildet
